Europäisches Patentamt

European Patent Office

Office européen des brevets

(19)

(11) Numéro de publication : **0 482 998 A1**

## (12) DEMANDE DE BREVET EUROPEEN

(21) Numéro de dépôt : **91402822.0**

(22) Date de dépôt : **23.10.91**

(51) Int. Cl.⁵ : **B01L 3/02**, G01N 1/10

(30) Priorité : **26.10.90 FR 9013281**

(43) Date de publication de la demande :
**29.04.92 Bulletin 92/18**

(84) Etats contractants désignés :
**BE CH DE ES FR GB IT LI LU NL SE**

(71) Demandeur : **ICAUNA (S.A.R.L.)**
**16-18 boulevard de la Marne**
**F-89000 Auxerre (FR)**

(72) Inventeur : **Drevet, Jean-Baptiste**
**45 boulevard Saint-Michel**
**F-75005 Paris (FR)**
Inventeur : **Lavoue, Gilbert**
**La petite Tuilerie - Fenay**
**F-21600 Longvic (FR)**
Inventeur : **Guigan, Jean**
**5, rue des Ursulines**
**F-75005 Paris (FR)**

(74) Mandataire : **Serin, Jean-Pierre**
**Cabinet PIERRE LOYER 77, rue Boissière**
**F-75116 Paris (FR)**

(54) **Dispositif perfectionné pour prélever et déposer une dose prédéterminée de liquide.**

(57) Dispositif pour prélever et déposer une dose prédéterminée de liquide ; il comporte une pipette constituée d'une tige (1) d'extrémité creuse (4), des moyens mécaniques maintenant l'extrémité creuse dans une position de remplissage, ou dans une position de dépose, et des moyens mécaniques (3) entraînant la pipette en rotation autour d'un axe vertical (2) ; il comporte en outre au moins un orifice de fuite (21) et une chambre (9) d'entrée ou de sortie du liquide orientée approximativement radialement par rapport à l'axe de rotation (2), de sorte que, en rotation entre l'entrée et à la sortie du conduit il règne un gradient de pression radial.

FIG.2

La présente invention se rapporte à un dispositif perfectionné pour prélever et déposer d'une dose prédéterminée de liquide.

Il est déjà connu par le brevet FR-A-87.15.688 de réaliser un tel dispositif. Cependant celui-ci n'est pas satisfaisant car la quantité réellement prélevée est très aléatoire: les résultats obtenus varient jusqu'à 60% du résultat attendu. Les quantités à prélever sont très faibles et utilisées à des fins d'analyses expérimentales en laboratoire; elles sont par exemple de l'ordre de 20 microlitres et le dispositif ne prélève des quantités de l'ordre de 5 à 10 microlitres. Etant donné la petitesse de ces faibles volumes, de telles variations sont inacceptables car elles faussent ensuite tous les résultats d'analyse.

La présente invention a pour objectif de résoudre ces inconvénients.

Elle a pour objet un dispositif perfectionné pour prélever et déposer une dose prédéterminée de liquide du genre comportant une pipette constituée d'une tige au bout de laquelle est fixée un élément creux, ayant un volume de remplissage, des moyens mécaniques maintenant l'extrémité libre de la pipette soit dans une position de remplissage-calibrage, soit dans une position de dépose, et des moyens mécaniques entraînant à grande vitesse la pipette autour d'un axe vertical dit axe d'évolution, caractérisé en ce qu'il comporte, en combinaison:

– un conduit ou chambre d'entrée ou de sortie du liquide orienté approximativement radialement par rapport à l'axe de rotation, de sorte que, en rotation entre l'entrée et à la sortie du conduit il règne un gradient de pression radial,

– et au moins un orifice de fuite, dans le volume de remplissage.

Le dispositif est encore remarquable par les caractéristiques suivantes:

– l'élément creux est sphérique ou ovoïde et comporte une cloison sensiblement diamétrale séparant le volume de remplissage et la chambre d'entrée, munie d'une ouverture de communication, la chambre étant limitée par une calotte et, du coté de la chambre d'entrée la cloison porte une sur-épaisseur s'étendant perpendiculairement au plan de la cloison;

– la sur-épaisseur est constituée d'une pastille en forme de dièdre;

– la hauteur de la sur-épaisseur est comprise entre le tiers et les deux tiers de la hauteur séparant le plan de la cloison et le bord intérieur de la calotte le plus éloigné;

– le volume de remplissage comporte deux évents ou orifices de fuite, lesquels sont disposés de chaque côté et a proximité immédiate de l'ouverture de communication;

– la cloison fait un angle $\alpha$ avec les cercles tangents centrés sur l'axe d'évolution, de l'ordre de 10 à 30 degrés;

– l'angle au centre $\Gamma$ de la portion sphérique de la calotte situé entre le bord de la calotte adjacent à l'ouverture de communication du volume et le bord d'extrémité de ladite calotte est inférieur à 90 degrés; de préférence il est compris entre 80 et 50 degrés;

– l'élément creux a une forme tubulaire;

– le tube s'étend approximativement dans le prolongement de la tige et constitue une partie de celle-ci

– la tige comporte à son extrémité inférieure une extension radiale qui présente une cavité, ouverte vers l'extérieur, communiquant avec le volume intérieur du tube, la cavité constituant la chambre d'entrée et de sortie du dispositif.

– la paroi de l'extension, du côté de l'ouverture avec l'extérieur, a une épaisseur substantielles, dont le profil coopère à la définition de la section de l'ouverture dans la. chambre d'entrée.

– le volume tubulaire ne comporte qu'un évent, situé en partie haute;

En outre le dispositif est caractérisé en ce que:

– la tige de la pipette est maintenue verticale, décalée par rapport à l'axe d'évolution;

– l'élément creux et/ou la tige sont montés rotatifs autour de l'axe de la tige de sorte que le passage de la position de prélèvement à la position de dépose se fasse par rotation de l'élément creux sur lui même d'une valeur allant de 3/8 à 1/2 tour.

Afin de mieux comprendre l'invention on a illustré au dessin annexé deux exemples de réalisation du dispositif selon l'invention sur lequel:

– la figure 1 est une vue schématique du dispositif selon l'invention en coupe verticale selon I-I;

– la figure 2 est une vue en coupe selon II-II du dispositif de la figure 1 dans la variante du élément creux en forme sphérique;

– la figure 3 est une vue de face de la sphère de prélèvement selon l'invention;

– la figure 4 est une vue de dos de la sphère de la figure 3

– la figure 5 est une vue en coupe selon II-II de la figure 1 dans une variante de l'élément creux en forme ovoïde et avec une variante de forme de la sur-épaisseur;

– la figure 6 illustre une variante des moyens mécaniques de rotation;

– la figure 7 est une vue schématique de dessus de la figure 6;

– les figures 8a, 8b, 8c illustrent schématiquement le passage de la position de remplissage, à la position de dépose;

– la figure 9 est une vue schématique d'une deuxième forme de réalisation du dispositif selon l'invention;

– la figure 10 est une vue en coupe selon IX-IX de l'élément creux selon l'invention.

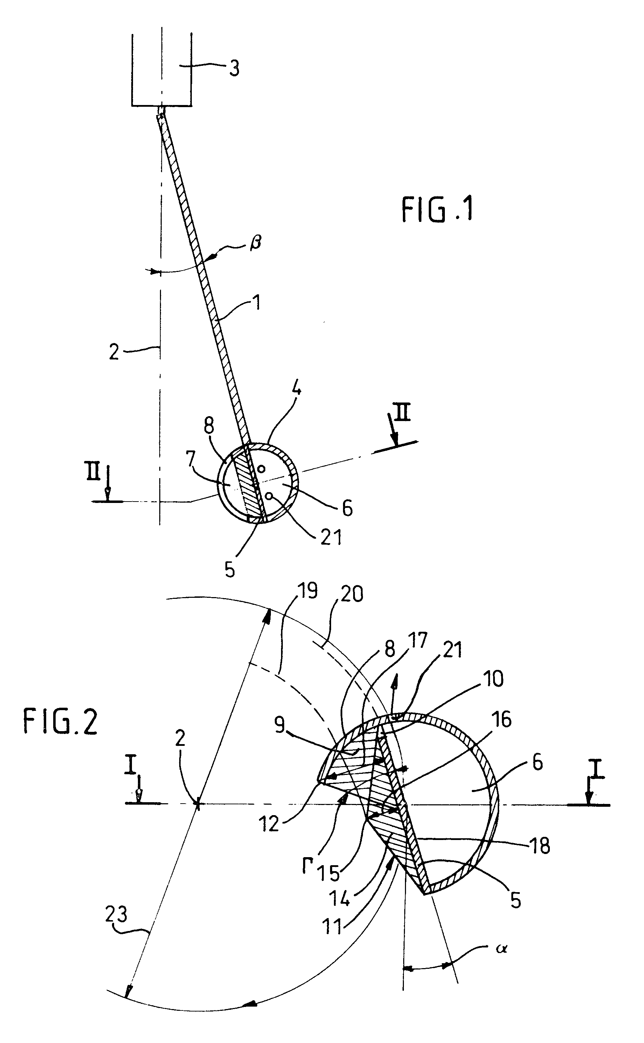

Comme le montre la figure 1 le dispositif selon l'invention comporte comme cela est connu une tige 1 , montée en rotation autour d'un axe d'évolution 2 sur un ensemble moteur 3 non décrit. L'extrémité inférieure de la tige porte un élément creux 4 destiné à prélever du liquide présent dans un tube et à le déposer ensuite sur une plaquette d'analyse ou tout autre support, ou dans un quelconque solvant. La tige est inclinable d'un angle + β afin de mettre l'élément creux en position de remplissage et - β pour mettre l'élément en position de dépose.

Dans une première forme de réalisation l'élément creux 4 est globalement sphérique ou ovoïde et comporte une cloison 5 qui définit d'un côté un volume 6 de remplissage, de l'autre une zone 7 d'entrée et sortie de liquide, laquelle présente comme cela est connu une portion de calotte 8 ouverte vers l'extérieur. Cette calotte est également sphérique ou ovoïde et définit un chambre d'entrée 9.

La cloison 5 comporte une ouverture 10 qui met en communication le volume 6 et la chambre d'entrée 9; cette ouverture est disposée le plus loin possible du centre de la sphère, de préférence à l'extrémité de la cloison,contre le bord de la paroi de l'élément 4.

Du côté de la zone d'entrée 7 la cloison 5 porte une sur-épaisseur 11 dont la fonction est de déterminer avec le bord 12 de la calotte une section d'entrée du liquide.

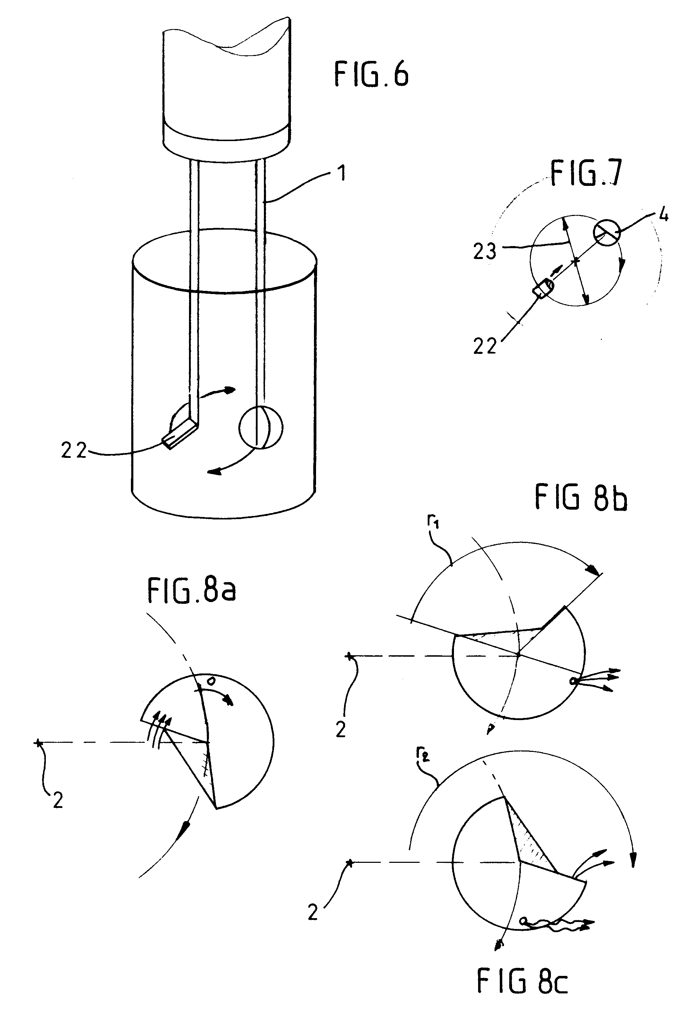

Cette sur-épaisseur est une extension de la cloison perpendiculairement au plan de la cloison; elle peut par exemple être réalisée sous la simple forme d'une paroi 13 perpendiculaire à la cloison ( figure 5) ou sous la forme d'une pastille 14 en forme de dièdre; la section d'entrée est délimitée par le sommet 15 de la paroi ou du dièdre

Bien entendu la forme de la sur-épaisseur peut être différente sans modifier la portée de l'invention.

La hauteur 16 de la sur-épaisseur est comprise entre le tiers et les deux tiers de la hauteur 17 séparant le plan intérieur 18 de la cloison et le bord intérieur 12 de la calotte le plus éloigné; dans l'exemple illustré la pastille est un dièdre régulier, c'est à dire présentant en coupe transversale un triangle isocèle, et sa hauteur 16 au sommet est de l'ordre de la moitié de la hauteur 17 de la calotte.

Plus précisément, en combinaison avec la calotte, cette sur-épaisseur a pour fonction de définir un espace entre son sommet et le plan inférieur de l'ouverture de communication, espace encore appelé puits d'entrée; ce puits est caractérisé par les deux niveaux qu'il détermine: le niveau d'entrée (lorsque la pipette est utilisée en remplissage) est défini par la portion 19 approximativement cylindrique passant par le sommet de la sur-épaisseur, et le niveau de sortie est défini par la portion 20 de cylindre passant par ou approximativement confondue avec le plan inférieur de l'ouverture 10, les cylindres étant centrés sur l'axe d'évolution 2. Ces cylindres correspondent à des niveaux de pression.

Cette disposition de la sur-épaisseur et la création d'un puits augmente la pression dans la chambre d'entrée 9 et par conséquent au fond du puits au niveau de sortie. Elle permet donc, pour une même vitesse de rotation de la pipette, d'obtenir une pression d'entrée dans le volume de remplissage 6 plus forte.

De plus, selon l'invention on prévoit les dispositions suivantes:

– la cloison 5 de séparation fait un angle α avec les cercles tangents centrés sur l'axe d'évolution 2. Cette inclinaison, de l'ordre de 10 à 30 degrés, a pur but d'éviter la présence d'air résiduel emprisonné dans le volume de remplissage 6.

– l'angle au centre Γ de la portion sphérique de la calotte situé entre le bord de la calotte adjacent à l'ouverture de communication du volume et le bord 12 d'extrémité de ladite calotte est inférieur à 90 degrés; de préférence il est compris entre 80 et 50 degrés; par exemple avec une inclinaison de la cloison de 10 degrés, l'angle au centre est de l'ordre de 70 degrés.

Le dispositif comporte au moins un orifice de fuite 21 ou évent dans la paroi du volume de remplissage 6, destiné à évacuer l'air du volume pendant le remplissage. Dans cette première forme de réalisation, on prévoit de disposer deux évents 21, un de chaque côté de l'ouverture 10 de communication, au voisinage immédiat de la cloison 5. Bien entendu ce choix de deux évents n'est pas limitatif et toute disposition différente quant au nombre et à la position sur la paroi du volume peut être envisagée sans sortir du cadre de l'invention.

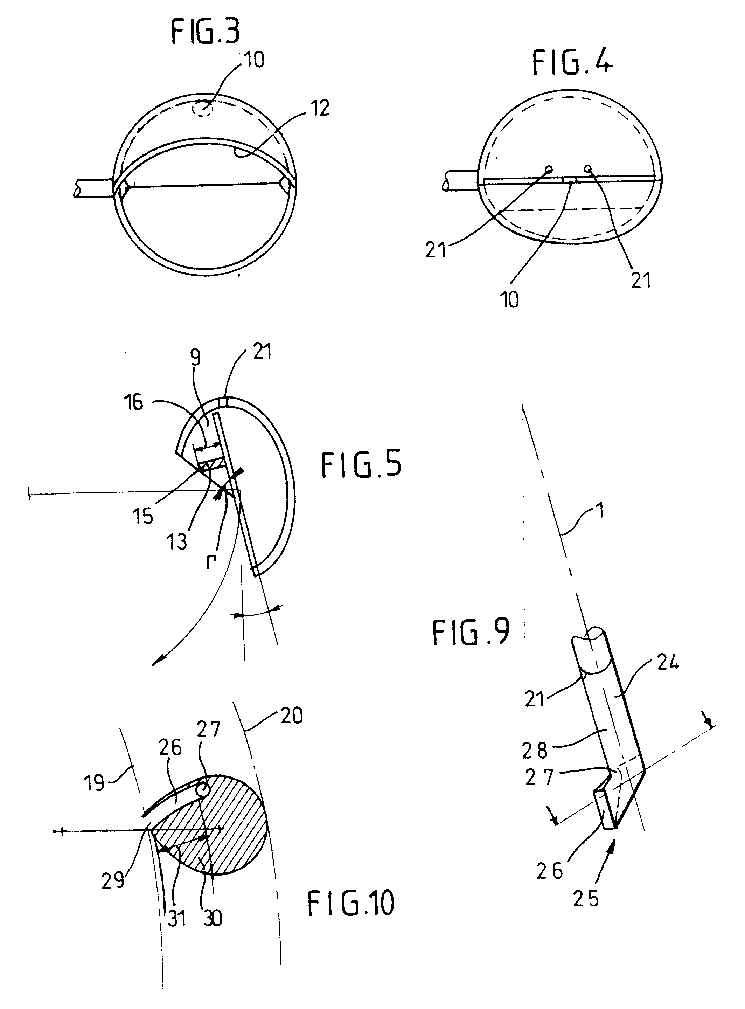

Dans une variante de réalisation illustrée aux figures 2 à 4 le dispositif est une sphère, la face intérieure de la cloison est diamétrale, le volume de remplissage étant égal à une demi- sphère.

Dans une seconde variante illustrée à la figure 5 le dispositif a une forme oblongue ou ovoïde qui présente une moindre résistance au déplacement dans le liquide.

Dans les deux cas la pipette est inclinée par rapport à l'axe vertical 2 de rotation ou évolution d'un angle + β comme cela est indiqué au brevet sus-mentionné. Selon l'invention dans la variante de réalisation de la figure 6, la tige 1 de la pipette est maintenue verticale, mais décalée par rapport à l'axe de rotation 2 d'une valeur telle que la sphère ait la même situation qu'avec une inclinaison β de la tige. Le passage de la position de prélèvement ou remplissage à la position de dépose se fait alors par une rotation de la sphère sur elle-même d'une valeur allant de 3/8 de tour à 1/2 tour (figures 8): en figure 8a la sphère est en position de remplissage, les évents 21 chassent l'air du volume de remplissage; en figure 8b on a tourné la tige ou l'élément creux lui-même de 3/4 de tour (référence $r_1$), on est en position de dépose, le liquide est évacué par les évents; en figure 8c on a tourné de 1/2 tour (référence r₂), on est encore en position de dépose, le liquide est évacué principalement par le bord 12 de la calotte et secondairement par les évents. Cette disposition permet d'utiliser des tiges courtes donc plus rigides diminuant encore les facteurs d'imprécision.

En outre et en variante on prévoit de disposer sur la trajectoire de l'élément creux 4, et tournant avec lui devant ou derrière, un élément déflecteur 22, destiné à détruire le vortex dû à la rotation du dispositif.

A titre d'exemple on a réalisé la pipette suivante:
– tige de longueur l= 30 mm ( la longueur est mesurée au centre de la sphère),
– diamètre extérieur de la sphère d(4) = 4 mm
– épaisseur de la paroi = 0,1 mm,
– cloison diamétrale,
– diamètre ouverture de communication: d(10)= 0.8mm
– diamètre des évents d(21) = 0,3 mm
– hauteur de la sur-épaisseur 16 = 1 mm
– angle d'inclinaison (ou de béquillage) β=4° 46′ environ
– diamètre d'évolution de la sphère autour de l'axe vertical: d(23) = 5 mm ; c'est le diamètre choisi pour une évolution dans un tube de prélèvement de 10 mm de diamètre; les diamètre horstout décrit par la sphère est alors de l'ordre de 8 à 9 mm. Ce diamètre n'est bien entendu pas limitatif en soi;
– vitesse de rotation: entre 600 et 2000 tours/minute.

Une telle pipette permet des prélèvements d'échantillons de 15 microlitres avec une précision de l'ordre de 0,6 % et un écart type de 0,10 pour le même volume.

En outre on note une absorption de la pipette, encore appelée effet mémoire, due à l'état de surface; cet effet mémoire pour la pipette ci-dessus réalisée sans traitement de surface est de l'ordre de 0,3 % du volume prélevé.

Dans une seconde forme de réalisation, l'élément creux a une forme tubulaire 24 qui s'étend approximativement dans le prolongement de la tige 1 et constitue une partie de celle-ci. L'extrémité inférieure de la tige présente une extension 25 ou prolongement qui s'étend dans un plan approximativement perpendiculaire à l'axe de la tige dans une direction radiale. L'extension 25 comporte une cavité 26 qui d'une part communique 27 avec le volume intérieur 28, d'autre part se termine par une ouverture 29 sur l'extérieur, ouverture d'entrée et sortie de liquide.

Cette extension, vue en coupe horizontale (figure 10), comporte en outre une partie pleine 30 qui destinée à réaliser un profil similaire à la sur-épaisseur prévue dans le cas d'un corps sphérique.

La forme et l'orientation de la cavité définissent un puits de la même façon que précédemment: un gradient de pression s'établit entre l'entrée et la sortie de la cavité.

L'évent , unique dans cette forme de réalisation, est situé dans le réservoir 28, en partie haute, dans la paroi cylindrique par exemple.

Bien entendu le déflecteur 22 précédemment décrit peut également être prévu devant l'élément creux 4 en forme tubulaire.

Cette forme de réalisation a pour avantage de permettre des prélèvements très précis du fait que l'évent peut ne pas être plongé dans le liquide. En outre le dispositif permet de prévoir des volumes de réservoir variables, par exemple en prévoyant dans la tige un piston de réglage.

## Revendications

1 - Dispositif perfectionné pour prélever et déposer une dose prédéterminée de liquide du genre comportant une pipette constituée d'une tige (1) au bout de laquelle est fixée un élément creux (4), ayant un volume de remplissage (6), des moyens mécaniques maintenant l'extrémité libre de la pipette soit dans une position de remplissage-calibrage, soit dans une position de dépose, et des moyens mécaniques (3) entraînant à grande vitesse la pipette autour d'un axe vertical dit axe d'évolution (2), caractérisé en ce qu'il comporte, en combinaison:
– un conduit ou chambre (9) d'entrée ou de sortie du liquide orienté approximativement radialement par rapport à l'axe de rotation (2), de sorte que, en rotation entre l'entrée et à la sortie du conduit il règne un gradient de pression radial,
– et au moins un orifice de fuite (21), dans le volume de remplissage.

2 - Dispositif selon la revendication 1 dans lequel l'élément creux est sphérique ou ovoïde et comporte une cloison (5) sensiblement diamétrale séparant le volume de remplissage (6) et la zone (7), munie d'une ouverture de communication (10), la chambre étant limitée par une calotte (8), caractérisé en ce que du coté de la zone d'entrée (7) la cloison porte une surépaisseur (11) s'étendant perpendiculairement au plan de la cloison;

3 - Dispositif selon la revendication 2 caractérisé en ce que la sur-épaisseur (11) est constituée d'une pastille (14) en forme de dièdre;

4 - Dispositif selon la revendication 2 caractérisé en ce que la hauteur (16) de la sur-épaisseur est comprise entre le tiers et les deux tiers de la hauteur (17) séparant le plan de la cloison et le bord intérieur de la calotte le plus éloigné et définit un puits d'entrée;

5 - Dispositif selon la revendication 2 caractérisé en ce que le volume de remplissage (6) comporte deux évents ou orifices de fuite (21), lesquels sont disposés de chaque côté et a proximité immédiate de l'ouverture de communication (10);

6 - Dispositif selon la revendication 2 caractérisé en ce que la cloison (5) fait un angle α avec les cercles tangents centrés sur l'axe d'évolution (2), de l'ordre de 10 à 30 degrés;

7 - Dispositif selon la revendication 2 caractérisé en ce que l'angle au centre Γ de la portion sphérique de la calotte (8) située entre le bord de la calotte adjacent à l'ouverture de communication du volume et le bord d'extrémité (12) de ladite calotte est inférieur à 90 degrés;

8 - Dispositif selon la revendication 7 caractérisé en ce que l'angle Γ est compris entre 80 et 50 degrés;

9 - Dispositif selon la revendication 1 caractérisé en ce que l'élément creux (4) a une forme tubulaire;

10 - Dispositif selon la revendication 9 caractérisé en ce que le tube s'étend approximativement dans le prolongement de la tige (1) et constitue une partie de celle-ci;

11 - Dispositif selon la revendication 9 caractérisé en ce que la tige (1) comporte à son extrémité inférieure une extension radiale (25) qui présente une cavité (26), ouverte vers l'extérieur (29), communiquant avec le volume intérieur du tube, la cavité constituant la chambre d'entrée et de sortie du dispositif.

12 - Dispositif selon la revendication 11 caractérisé en ce que la paroi de l'extension (25), du côté de l'ouverture avec l'extérieur (29), a une épaisseur substantielles, dont le profil (30) définit la section de l'ouverture dans la. chambre d'entrée et la hauteur (31) du puits d'entrée.

13 - Dispositif selon la revendication 9 caractérisé en ce que le volume tubulaire ne comporte qu'un évent (21), situé en partie haute;

14 - Dispositif selon la revendication 1 caractérisé en ce que la tige (1) de la pipette est maintenue verticale, décalée par rapport à l'axe d'évolution (2);

15 - Dispositif selon la revendication 14 caractérisé en ce que l'élément creux et/ou la tige sont montés rotatifs autour de l'axe (2) de la tige de sorte que le passage de la position de prélèvement à la position de dépose se fait par rotation de l'élément creux (4) sur lui même d'une valeur allant de 3/8 à 1/2 tour.

16 - Dispositif selon la revendication 1 caractérisé en ce qu'il comporte un élément déflecteur (22) tournant avec l'élément creux (4).

FIG.1

FIG.2

FIG.3

FIG.4

FIG.5

FIG.9

FIG.10

FIG.6

1

22

FIG.7

23

4

22

FIG 8b

r₁

2

FIG.8a

2

r₂

2

FIG 8c

EP 0 482 998 A1

Office européen
des brevets

**RAPPORT DE RECHERCHE EUROPEENNE**

Numero de la demande

EP    91 40 2822

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 316 698 (J. GUIGAN)<br>* le document en entier *<br>--- | 1,2 | B01L3/02<br>G01N1/10 |
| A | DE-A-3 218 467 (EPPENDORF GERÄTEBAU NETHELER & HINZ)<br>* page 30, ligne 6 - ligne 30 *<br>--- | 1 | |
| A | FR-A-1 457 933 (A.N. BLADES)<br>* page 2, colonne de gauche, ligne 46 - page 3, colonne de gauche, ligne 21 *<br><br>----- | 1 | |

| DOMAINES TECHNIQUES RECHERCHES (Int. Cl.5) |
|---|
| B01L<br>G01N |

Le présent rapport a été établi pour toutes les revendications

| Lieu de la recherche | Date d'achèvement de la recherche | Examinateur |
|---|---|---|
| LA HAYE | 03 FEVRIER 1992 | BINDON C.A. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9